# FASCICULE DE BREVET EUROPEEN

(11) **EP 1 140 720 B1**
(45) Date de publication et mention de la délivrance du brevet: **28.03.2007**
(21) Numéro de dépôt: 99962253.3
(22) Date de dépôt: 13.12.1999
(51) Int. Cl.: C03C 17/34, C23C 14/08, G02B 1/10

(54) **COUCHE DE PROTECTION POUR SUBSTRAT REVETU**
SCHUTZSCHICHT FÜR BESCHICHTETES SUBSTRAT
PROTECTIVE LAYER FOR COATED SUBSTRATE

(30) Priorité: 22.12.1998 EP 98124359
(43) Date de publication de la demande: 10.10.2001
(73) Titulaire: GLAVERBEL, B-1170 Bruxelles (BE)
(72) Inventeur: HEVESI, Kadosa, B-5100 Jambes (BE); DECROUPET, Daniel, B-5070 Fosses-la-Ville (BE)
(74) Mandataire: Farmer, Guy Dominic
(86) Numéro de dépôt international: PCT/EP1999/009848
(87) Numéro de publication internationale: WO 2000/037375

(56) Documents cités:
- EP-A- 0 024 466
- EP-A- 0 185 314
- EP-A- 0 291 010
- EP-A- 0 500 445
- EP-A- 0 504 790
- EP-A- 0 536 607
- WO-A-99/48828
- WO-A-99/65838
- FR-A- 2 391 173
- GB-A- 2 293 179
- US-A- 4 868 004
- US-A- 5 110 662

## Description

La présente invention s'inscrit dans le domaine des substrats revêtus de couches minces choisies pour leurs propriétés optiques et/ou énergétiques ainsi que de leurs procédés de fabrication et plus particulièrement dans le domaine des couches destinées à conférer aux revêtements qui les comprennent une résistance aux attaques chimiques améliorée.

Des substrats vitreux revêtus de couches sont utilisés dans différents domaines et à différentes fins. Ainsi par exemple, du verre revêtu de couches appropriées peut être utilisé comme miroir, à des fins de protection solaire de bâtiments et de véhicules ou encore de confinement de la chaleur à l'intérieur d'un local. De tels revêtements peuvent être réalisés selon différents procédés, principalement par les techniques dites de "dépôt chimique en phase vapeur" ou de "pulvérisation cathodique sous vide" des constituants formateurs des couches qui composent ces revêtements. Les couches externes des revêtements ainsi obtenus, particulièrement lorsqu'elles sont formées par dépôt sous vide, sont très minces et donc particulièrement sensibles aux attaques chimiques que peuvent provoquer des polluants atmosphériques, des détergents utilisés pour le nettoyage des vitrages qui les portent ou de simples manipulations. Ces attaques détériorent les revêtements en altérant leurs caractéristiques fonctionnelles et esthétiques.

Il est possible d'améliorer la résistance aux attaques chimiques de revêtements en augmentant l'épaisseur de la dernière couche qu'ils comprennent. Cependant, ceci provoque généralement des modifications indésirables des propriétés optiques des vitrages portant ces couches.

La demande de brevet GB 2293179 décrit une couche de protection constituée d'oxyde de silicium d'une épaisseur comprise entre 1 et 10 nm déposée par pulvérisation cathodique sur des revêtements dont la couche adjacente à la couche de protection est choisie parmi le nitrure de titane, l'oxyde d'étain, l'oxyde de zinc, l'oxyde de titane et le chrome.

Nous avons découvert qu'il est possible de réaliser des couches de protection chimique de vitrages revêtus en utilisant à cette fin plusieurs matériaux spécifiques autres que l'oxyde de silicium offrant une résistance chimique particulière dans une gamme d'épaisseurs n'affectant pas substantiellement les propriétés optiques des substrats revêtus qui les comprennent

Dès lors, la présente invention se rapporte à une couche de protection de revêtements de substrats, ladite couche de protection étant composée d'un matériau constitué d'oxyde d'inox ou d'oxyde d'un au moins des éléments des colonnes VIb, VIIb et VIII du tableau périodique.

Une couche de protection selon l'invention améliore la résistance chimique du substrat revêtu, probablement du fait qu'elle réduit la porosité de la couche de revêtement sous-jacente et rend de cette manière ledit revêtement moins sensible aux attaques chimiques.

Il est décrit un procédé de fabrication, par pulvérisation cathodique d'un substrat portant un revêtement dans lequel les couches de revêtement sont déposées sur le substrat, l'une de ces couches étant une couche de protection composée d'un matériau choisi parmi l'oxyde d'inox et les oxydes des métaux des colonnes VIb, VIIb et VIII du tableau périodique des éléments ainsi que de leurs alliages.

La couche de protection selon l'invention présente une épaisseur comprise entre 1 et 10 nm.

En effet, cette couche confère au revêtement qui la comprend une résistance chimique améliorée lorsque son épaisseur n'est pas inférieure à 1 nm. Par ailleurs, une épaisseur très élevée, sensiblement supérieure à 10 nm pourrait affecter de manière indésirable les propriétés optiques du revêtement.

Cependant, une épaisseur aussi faible que 1 nm n'est généralement pas compatible avec certaines attentes commerciales en termes de durabilité du substrat revêtu et il est d'autre part le plus souvent inutile de prévoir des épaisseurs de la couche de protection supérieure à 5 nm pour obtenir une protection optimale du revêtement. Il est donc préféré que l'épaisseur de la couche de protection soit comprise entre 2 et 5 nm. Une couche de protection d'une épaisseur comprise entre ces limites a un effet minime sur les propriétés optiques du substrat revêtu, quel que soit le revêtement qui la comprend, alors qu'elle en améliore sa résistance chimique de manière sensible.

Une couche de protection selon l'invention est particulièrement avantageuse dans le cas de la fabrication industrielle de substrats revêtus, puisqu'elle convient à différents types de revêtements réalisables en séquence dans la même unité de production. En particulier, lorsqu'un revêtement déposé par pulvérisation cathodique comporte une ou plusieurs couches métalliques, par exemple d'argent, il est courant de protéger ces couches métalliques par de minces couches dites sacrificielles de métaux tels que le zinc, le titane, l'aluminium ou un alliage de nickel et de chrome, qui s'oxydent ou se nitrurent lors du dépôt des couches suivantes du revêtement. Ces couches sacrificielles peuvent procurer également une certaine amélioration de la résistance chimique du substrat revêtu lorsqu'elles présentent une épaisseur suffisante. Cependant, l'augmentation de l'épaisseur des couches sacrificielles réduit la transmission lumineuse du produit. Cet inconvénient est pallié par l'utilisation d'une couche de protection selon l'invention, qui dispense de devoir augmenter l'épaisseur des couches sacrificielles pour obtenir une résistance chimique acceptable du produit.

La couche de protection selon l'invention peut être soit en position extérieure, soit recouverte d'au moins une couche supplémentaire qui n'affecte pas substantiellement la transmission et la réflexion lumineuse des couches sous-jacent

La couche de protection selon l'invention est particulièrement efficace lorsque la couche de revêtement sous-jacente est composée de nitrure de titane, d'oxyde d'étain, d'oxyde de zinc, d'oxyde de titane de chrome ou de silicium.

De préférence, la couche de protection selon l'invention est composée d'oxyde de chrome à des degrés d'oxydation divers qui est un matériau particulièrement résistant aux attaques chimiques et offrant une grande facilité de dépôt, spécialement par pulvérisation cathodique sous vide.

La couche de protection selon l'invention est particulièrement adaptée à la protection de revêtement de miroirs.

De préférence le substrat est constitué d'une matière vitreuse telle que du verre. D'autres matières peuvent néanmoins être utilisées, dont des matières plastiques.

L'invention sera maintenant décrite plus en détail, en se référant aux exemples non limitatifs suivants.

### EXEMPLES 1 A 7

Dans ces exemples, la transmission lumineuse (TL) représente le pourcentage du flux lumineux émis entre des longueurs d'ondes de 380 nm et 780 nm par une source d'illuminant C telle que définie par la Commission Internationale de l'Eclairage (CIE) qui est transmis à travers du substrat revêtu.

La réflexion lumineuse (RL) représente le pourcentage du flux lumineux défini ci-dessus qui est réfléchi par la face du substrat opposée à celle qui porte le revêtement,

La couleur du substrat revêtu est mesurée selon la méthode dite de Hunter (RS Hunter, The measurement of Appearance, John Wiley 1 Sons, NY 1975) et est exprimée dans le système de coordonnées L, a, b.

Des échantillons sont réalisés par pulvérisation cathodique sous vide de couches de revêtement sur des substrats de verre clair de 6 mm d'épaisseur sauf pour les échantillons D et 7 pour lesquels le substrat a une épaisseur de 3 mm.

L'échantillon B' est relatif à un revêtement comprenant une couche de protection composée d'un matériau ne faisant pas partie de ceux utilisables à cette fin selon l'invention et montre que l'utilisation de ce matériau, pour une épaisseur identique à celle de Cr2O3 utilisée comme couche de protection dans l'échantillon 3, conduit à une modification plus importante des propriétés optiques de l'échantillon correspondant de référence B qui ne comprend pas de couche de protection.

Le dépôt de couches d'argent est effectué dans une atmosphère inerte d'azote ou d'argon à partir d'une cathode d'argent. Le dépôt de ZnO, de SnO₂ et de Cr2O3 sont respectivement effectués à partir d'une cathode de zinc, d'étain ou de chrome, dans une atmosphère réactive d'oxygène.

Ces produits sont soumis à un ou plusieurs parmi une série de tests tels que décrits ci-dessous, choisi(s) selon les applications visées.

### Test 1 : Cleveland (2 semaines).

Le test Cleveland est réalisé à l'aide d'une enceinte de verre dans laquelle l'échantillon forme la paroi supérieure, sa face revêtue étant orientée vers l'intérieur de l'enceinte. Celle-ci contient de l'eau à une température suffisante pour fournir de la vapeur à 50°C au voisinage immédiat de l'échantillon. La paroi supérieure de l'enceinte étant à une température inférieure à celle de la vapeur, celle-ci se condense sur cette paroi et dégouline sur la face revêtue de l'échantillon. Cette dernière est ensuite frottée au moyen d'un chiffon pour la sécher. S'il est enlevé par le chiffon, le revêtement n'a pas survécu au test.

### Test 2 : Brouillard salin (5 heures).

Le test au brouillard salin consiste à pulvériser une solution de NaCl sur des échantillons pour les soumettre en continu à un brouillard salin à environ 35°C.

### Test 3 : Soufre (15 minutes).

L'échantillon est soumis à une atmosphère de dioxyde de soufre contrôlée thermostatiquement à 40°C dans une enceinte fermée.

### Test 4 : Lavage (30 secondes).

L'échantillon à tester est placé sur une surface horizontale et subit le dépôt, à l'aide d'une pipette, de détergent concentré (RBS 50 de Chemical Products Belgium, rue Bollinckx, 271 - 1190 Bruxelles). Après une période donnée, le point d'impact du détergent est essuyé et l'échantillon est examiné en réflexion. Une valeur faible pour ce test est une indication que le produit pourrait présenter des défauts lorsqu'il est soumis à un lavage au détergent.

### Test 5 : Soude (2 heures).

L'échantillon à tester est plongé dans une solution aqueuse de NaOH de pH 12 à 80°C.

### Test 6 : Cycle alterné (20 cycles).

L'échantillon est soumis à des cycles comportant chacun une heure d'exposition au test du brouillard salin, 7 heures d'exposition à la température ambiante et 16 heures d'exposition au test Cleveland.

Le tableau suivant reprend les propriétés optiques des échantillons 1 à 7 ainsi que le résultats des tests subis par ces échantillons. Les échantillons identifiés par des lettres sont donnés à titre comparatif. Dans les colonnes relatives aux différents tests, "OK" signifie que l'échantillon a subi le test sans dégradation sensible de ses propriétés optiques et "KO" qu'il a subi d'importantes dégradations de ses propriétés.

| N° | EMPILEMENT (épaisseurs en nm) | TL | RL | L | a | b | test 1 | test 2 | test 3 | test 4 | test 5 | test 6 |
|---|---|---|---|---|---|---|---|---|---|---|---|---|
| A | TiN(40) | 17.6 | 21.8 | 46.7 | -2.1 | -4.5 | KO | - | - | - | - | - |
| 1 | TiN(40)/Cr2O3(2.0) | 17.8 | 22.2 | 47.2 | -2.2 | -4.4 | OK | - | - | - | - | - |
| B | ZnO(40)/Ag(12)/Ti(2.9)/Zn0(40) | 85.2 | 5.5 | 23.4 | 1.4 | -9.0 | KO | - | KO | KO | - | - |
| 2 | ZnO(40)/Ag(12)/Ti(2.9)/Zn0(40)/Cr2O3(1.5) | 84.5 | 5.9 | 24.3 | 1.1 | -9.5 | OK | - | KO | KO | - | - |
| 3 | ZnO(40)/Ag(12)Ti(2.9)/Zn0(40)/Cr2O3(4.5) | 83.0 | 6.9 | 26.4 | 0.6 | -10.2 | OK | - | OK | OK | - | - |
| B' | ZnO(40)/Ag(12)Ti(2.9)/Zn0 (40)/TiO2(4.5) | 83.6 | 8.2 | 28.7 | 0.6 | -12.7 | - | - | OK | - | - | - |
| C | SnO2(45)/Ag(12)/Ti(2.9)/SnO2(45) | 84.5 | 6,2 | 25.0 | 2.5 | -10.2 | KO | - | KO | - | - | - |
| 4 | SnO2(45)/Ag(12)/Ti(2.9)/SnO2(45)/Cr2O3(1.5) | 83.7 | 6.8 | 26.1 | 2.0 | -10.8 | OK | - | OK | - | - | - |
| 5 | SnO2(45)/Ag(12)/Ti(2.9)/SnO2(45)/Cr2O3(4.5) | 81.8 | 8.2 | 28.7 | 1.0 | -11.2 | OK | - | OK | - | - | - |
| D | Si(15)/SnO2(25) | 26.4 | 53.3 | 73.0 | -2.1 | 3.6 | - | KO | - | - | KO | KO |
| 7 | Si(15)/SnO2(25)/Cr203(3.0) | 27.0 | 52.0 | 72.1 | -2.5 | 5.9 | - | OK | - | - | OK | OK |

## Revendications

1. Substrat portant un revêtement comprenant au moins deux couches, **caractérisé en ce que** ledit revêtement comprend une couche destinée à conférer au revêtement une résistance aux attaques chimiques, déposée par pulvérisation cathodique, dont l'épaisseur est commise entre 1 et 10 nm de telle sorte qu'elle n'affecte pas substantiellement les propriérés optiques du substrat revêtu qui la comprend, cette couche étant composée d'un matériau choisi parmi l'oxyde d'inox et les oxydes des métaux des colonnes VIb, VIIb et VIII du tableau périodique des éléments ainsi que de leurs alliages, ladite couche de protection étant la plus extérieure du revêtement ou étant surmontée d'au moins une couche n'affectant pas sensiblement les propriétés optiques des couches sous-jacentes,

2. Substrat portant un revêtement selon la revendication 1, **caractérisé en ce que** ladite couche de protection a une épaisseur comprise entre 2 et 5 nm.

3. Substrat portant un revêtement selon l'une des revendications 1 à 2, **caractérisé en ce que** la couche adjacente à ladite couche de protection est choisie parmi le nitrure de titane, l'oxyde d'étain, l'oxyde de zinc, l'oxyde de titane, le chrome et le silicium.

4. Substrat portant un revêtement selon l'une des revendications 1 à 3, **caractérisé en ce que** ladite couche de protection est formée d'oxyde de chrome.

5. Substrat portant un revêtement selon l'une des revendications 1 à 4, **caractérisé en ce qu'**il forme un miroir.

6. Substrat portant un revêtement selon l'une des revendications 1 à 5, **caractérisé en ce que** le substrat est du verre.

## Claims

1. Substrate carrying a coating having at least two layers, **characterised in that** said coating comprises a layer intended to provide the coating with a resistance to chemical attacks deposited by cathodic sputtering, its thickness being in the range of between 1 and 10 nm, so that it does not have a substantial effect on the optical properties of the coated substrate containing it, this layer being composed of a material selected from stainless steel oxide and oxides of the metals of columns VIb, VIIb and VIII of the periodic table of elements as well as alloys thereof, said protective layer being the outermost layer of the coating or being covered by at least one layer, which does not significantly affect the optical properties of the underlying layers.

2. Substrate carrying a coating according to Claim 1, **characterised in that** said protective layer has a thickness in the range of between 2 and 5 nm.

3. Substrate carrying a coating according to one of Claims 1 to 2, **characterised in that** the layer adjacent to said protective layer is selected from titanium nitride, tin oxide, zinc oxide, titanium oxide, chromium and silicon.

4. Substrate carrying a coating according to one of Claims 1 to 3, **characterised in that** said protective layer is formed from chromium oxide.

5. Substrate carrying a coating according to one of Claims 1 to 4, **characterised in that** it forms a mirror.

6. Substrate carrying a coating according to one of Claims 1 to 5, **characterised in that** the substrate is made of glass.

## Patentansprüche

1. Substrat, das eine Beschichtung trägt, umfassend wenigstens zwei Schichten, **dadurch gekennzeichnet, dass** die Beschichtung eine Schicht umfasst, die dazu bestimmt ist, der Beschichtung Beständigkeit gegen chemische Angriffe zu verleihen und die durch Kathodenzerstäubung abgeschieden wird und deren Dicke zwischen 1 und 10 nm liegt, so dass sie die optischen Eigenschaften des beschichteten Substrats, das sie umfasst, nicht wesentlich beeinflusst, wobei diese Schicht aus einem Material, ausgewählt aus Edelstahloxid und den Oxiden der Metalle der Gruppen VIb, VIIb und VIII des Periodensystems der Elemente sowie ihren Legierungen, zusammengesetzt ist, und wobei die Schutzschicht die äußerste Schicht der Beschichtung ist, oder die mit wenigstens einer Schicht versehen ist, die die optischen Eigenschaften der darunter liegenden Schichten nicht merklich beeinflusst.

2. Substrat, das eine Beschichtung trägt, nach Anspruch 1, **dadurch gekennzeichnet, dass** die Schutzschicht eine Dicke einschfief3lich zwischen 2 und 5 nm aufweist.

3. Substrat, das eine Beschichtung trägt, nach einem der Ansprüche 1 bis 2, **dadurch gekennzeichnet, dass** die an die Schutzschicht grenzende Schicht ausgewählt ist aus Titannitrid, Zinnoxid, Zinkoxid, Titanoxid, Chrom oder Silizium.

4. Substrat, das eine Beschichtung trägt, nach einem der Ansprüche 1 bis 3, **dadurch gekennzeichnet, dass** die Schutzschicht aus Chromoxid gebildet ist.

5. Substrat, das eine Beschichtung trägt, nach einem der Ansprüche 1 bis 4, **dadurch gekennzeichnet, dass** sie einen Spiegel bildet.

6. Substrat, das eine Beschichtung trägt, nach einem der Ansprüche 1 bis 5, **dadurch gekennzeichnet, dass** das Substrat Glas ist.
